# EUROPEAN PATENT SPECIFICATION

(11) **EP 2 357 040 B1**
(45) Date of publication and mention of the grant of the patent: **11.08.2021**
(21) Application number: 11153687.6
(22) Date of filing: 08.02.2011
(51) Int. Cl.: B04C 5/04, B04C 5/28

(54) **Dynamic dust separator**
Dynamischer Staubtrenner
Séparateur de poussières dynamique

(30) Priority: 10.02.2010 SE 1000125
(43) Date of publication of application: 17.08.2011
(73) Proprietor: Acticon AB, 564 31 Bankeryd (SE)
(72) Inventor: BORANDER, Jerry, 564 36 Bankeryd (SE)
(74) Representative: AWA Sweden AB

(56) References cited:
- WO-A1-90/09838
- US-A- 1 772 037
- US-A- 2 546 246
- US-A1- 2009 139 192
- None

## Description

### Technical field

The present invention relates to a dynamic dust separator for efficient separation of grease, preferably from polluted air from kitchen equipment, such as frying tables, deep-fat fryers, cookers, etc., but also for separation of water and dust particles from polluted air in ventilation systems.

### Background of the invention

Dynamic dust separators in most cases have a cyclone filter, which is a purely mechanical filter entirely without moving parts and which uses the centrifugal force for cleaning exactly like a separator. The advantage of a cyclone filter lies in its simple structure, which also permits use at high temperatures. Dynamic dust separators with cyclones use the principle whereby particles in a stream of air are forced to change their direction of movement and continue in the tangential direction. In order to separate the dust particles, the stream of air is conveyed into a round container where the centrifugal force causes the solid particles to be thrown towards the outer edge. The solid particles are collected at the bottom of the container, which then has to be emptied. Cyclone separators are used in the cleaning of industrial flue gas, but also in industrial vacuum cleaners, central vacuum cleaners and, in some cases, ordinary domestic vacuum cleaners. Many types of cyclones are known and have been produced for different purposes. In principle, all of these cyclones comprise a vertical cylinder into which the air is introduced horizontally along the tangential plane, and the incoming air is inevitably forced around in a vortex such that particles of dirt are thrown outwards and separated. The air is removed vertically at the top edge of the cylinder. The disadvantage of a cyclone is that it is very sensitive to variations in flow. The flow should preferably be constant in order to achieve the optimum effect, without excessive pressure losses. In order to obtain a cyclone with a large contact surface for the separated pollutants, the cylinder must have a large diameter. In some cyclones, the air is introduced through vertical gaps around the cylinder, with guide rails in some cases being arranged around the cylinder in order to guide the air in. However, this means that the contact surface for the separated pollutants is considerably reduced. Problems with loud noise arise when today's cyclones are loaded with too great a flow of air in an attempt to make them more efficient. These problems have long been known to persons skilled in the art, but a satisfactory solution has not as yet been found. A dynamic dust separator according to the preamble of claim 1 is known from US 2 546 246 A.

### Invention

It is therefore an object of the present invention to make available a more efficient dynamic dust separator which permits considerable flows such that a strong suction effect can be maintained from start to finish without great pressure losses or noise-related problems. The dynamic dust separator contains compact cyclone spirals with a large contact surface for the separated pollutants. The cyclone spiral is hyperbolically shaped and comprises cyclone cores with vertical inlets for the polluted air and outlets at the top for the cleaned air. The polluted air is forced around in a vortex, the centrifugal force causing the pollutants to be thrown out towards the outer edge of the cyclone core and separated. The pollutants may be thrown towards the inner face on the periphery of the cyclone core. The proposed dynamic dust separator is extremely efficient for separation of grease from air extracted from kitchen equipment, such as frying tables, deep-fat fryers, cookers, etc., and also for separation of water and dust particles from polluted air in ventilation systems. Since the cyclone spiral is vertically arranged, the pollutants separated from the air may, by means of gravity, run down the inner face of the cyclone core. Below the cyclone core there may be a collecting vessel that may collect the pollutants separated from the air passing the dynamic dust separator. By hyperbolically shaped it may be meant that the width of an opening of the cyclone spiral, through which opening the polluted air enters the cyclone spiral, is larger then the width of a passage wherein the air enters the innermost spiral of the cyclone core. By having this tapering width throughout the spiral, the speed of the air increases on its way towards the cyclone core. The increased speed improves the separation of pollutants from the air. The air may be sucked through the cyclone spiral.

The dynamic dust separator may comprise a collecting vessel arranged below said vertically arranged cyclone spiral. The pollutants that are separated from the polluted air may thereby, by means of gravity, run down the inner face of the cyclone core and be collected in the collecting vessel.

### Description

Dynamic dust separator comprising a cyclone battery composed of cyclone spirals that are hyperbolically shaped. The cyclone battery that is set up using such cyclone spirals is adapted to the particular requirements of use. By turning the cyclone spirals in different ways in relation to one another when mounting them in the cyclone battery, it is possible to vary and control the intake of air in the desired manner. A surprising effect is that the cyclone spiral permits considerable flows, such that a strong suction effect can be maintained from start to finish, since the pressure drop across the cyclone filter is constant and does not create noise-related problems, regardless of whether the filter is clean or dirty. This effect is extremely advantageous when separating grease from air extracted from kitchen equipment. The cyclone battery is easily dismantled and cleaned in a dish washer. The cyclone spiral comprises a cyclone core with a vertical inlet extending along the full height for the polluted air, and with an outlet at the top where the cleaned air is sucked out. The polluted air is forced around in a vortex, the centrifugal force causing grease and solid particles to be thrown towards the periphery on the inside face of the cyclone core. Grease and dirt run by means of gravity down the wall on the inside of the cyclone core to the collecting vessel of the cyclone battery. The cleaned air is sucked out of the cyclone battery and conveyed onwards in an exhaust air channel. By virtue of the fact that the cyclone battery permits considerable flows of air that pass through the cyclone spirals, extremely efficient separation is achieved. Extremely small particles of dirt can also be separated, these being made to adhere to a pleated band that is placed in the vertical inlet of the cyclone core. The pleated film extends over the entire vertical inlet, without obstructing the through-flow of the polluted air.

An embodiment of the invention is described below and is illustrated in the accompanying drawing, in which
Fig. 1 shows a perspective view of a cyclone spiral forming part of the dynamic dust separator.
Fig. 2 shows a diagram of the function of a cyclone core with hyperbolic spiral.
Fig. 3 shows an outline diagram of how cyclone cores are joined to form a cyclone battery with separate inlets to each cyclone core.
Fig. 4 shows an outline diagram of how cyclone cores are joined to form a cyclone battery with common inlets to pairs of cyclone cores.
Fig. 5 shows an outline diagram of a cyclone battery with open cyclone cores.
Fig. 6 shows an outline diagram of a cyclone battery with in-built cyclone cores.

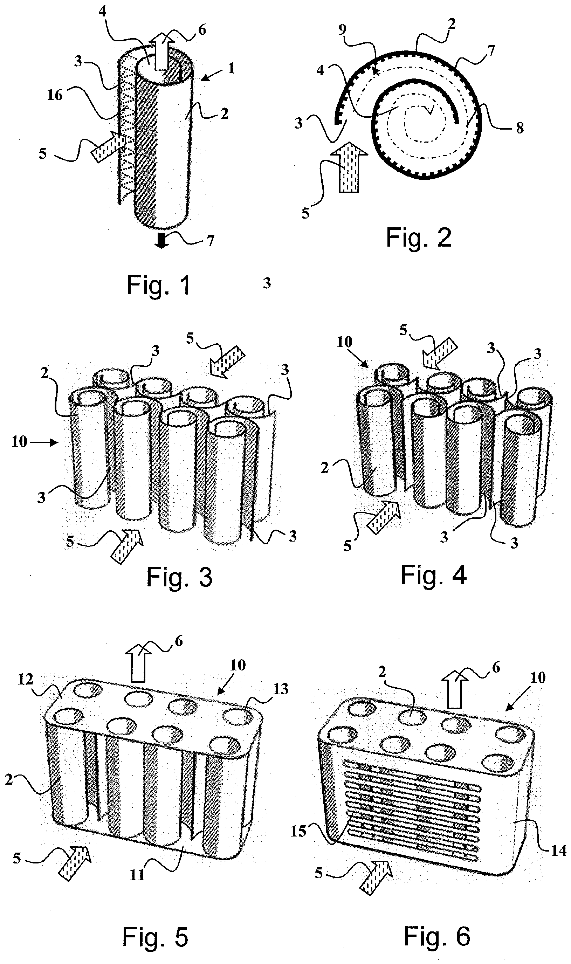

Dynamic dust separators as shown in Figs 1, 2, 3, 4, 5 and 6 represent the construction suitable in the example shown here.

Dynamic dust separator according to Figure 1 showing a perspective view of a cyclone spiral (1) that forms part of the dynamic dust separator. The cyclone spiral (1) comprises a cyclone core (2) with a vertical inlet (3) where the polluted air (5) is sucked in. The vertical inlet (3) extends along the full height of the cyclone core (2). The cleaned air (6) is sucked out from the upper edge of the innermost spiral (4) and is conveyed onwards in an exhaust air channel. The polluted air (5) sucked into the cyclone core (2) is forced around in a vortex, the centrifugal force causing grease and solid particles (7) to be thrown towards the inner face on the periphery of the cyclone core (2) and separated. Grease and solid particles (7) run by means of gravity down the wall on the inner face of the cyclone core (2) to a collecting vessel. In the vertical inlet (3), the figure shows symbolically how a pleated band (16) is placed in the inlet (3) and extends along the full height of the cyclone core (2). Small polluted particles adhere to the pleated band (16) in the inlet (3) of the cyclone core (2). The small polluted particles may be in a size range of about 1-2 micrometer.

Dynamic dust separator according to Figure 2 showing a diagram of the function of a cyclone core (2) designed as a hyperbolic spiral. The diagram also shows, by way of example, grease and solid particles (7) on the periphery against the inner face of the cyclone core (2). Moreover, the dot-and-dash arrow (8) illustrates how the polluted air (5) sucked in via the vertical inlet (3) is forced around in a vortex, the centrifugal force (9) causing grease and solid particles (7) to be thrown towards the periphery on the inner face of the cyclone core (2) all the way to the innermost spiral (4) where the cleaned air (6) is then sucked out and conveyed onwards in an exhaust air channel.

Dynamic dust separator according to Figure 3 showing an outline diagram of an example with eight cyclone cores (2) which are packed together such that they form a cyclone battery (10) with separate vertical inlets (3) for the polluted air (5) to each one of the eight cyclone cores (2). The figure shows, in this example, how four of the eight cyclone cores (2) are turned with the vertical inlets (3) facing in the same direction on one side and similarly, in mirror-inverted form, on the other side. By turning the cyclone spirals (2) in different ways relative to one another when mounting them in the cyclone battery (10), it is possible to vary and control the polluted air (5) in the desired manner.

Dynamic dust separator according to Figure 4 showing an outline diagram of an example with eight cyclone spirals (2) that are packed together such that they form a cyclone battery (10) with common delivery of the polluted air (5) to pairs of cyclone cores (2) where the vertical inlets (3) are mirror-inverted in relation to each other. The four pairs of cyclone cores (2) in this way form two pairs with the common vertical inlets (3) facing in the same direction on one side and similarly, in mirror-inverted form, on the other side of the cyclone battery (10).

Dynamic dust separator according to Figure 5 showing an outline diagram of a cyclone battery (10) with eight open cyclone cores (2) for example. The cyclone cores (2) are joined to one another at the bottom by a base plate (11). The base plate (11) allows grease and dirt running down the inside wall of the cyclone cores (2) to be conveyed to a collecting vessel. The figure also shows how the cyclone cores (2) are joined to one another at the top by a top plate (12) which is provided with holes (13) where the cleaned air (6) is sucked out via a collecting box and conveyed onwards in an exhaust air channel. The top plate (12) provides that the cleaned air does not leave the cyclone core (2) until it has reached the innermost spiral (4) of the cyclone core.

Dynamic dust separator according to Figure 6 showing an outline diagram of a cyclone battery (10) with in-built cyclone cores (2). The polluted air (5) is sucked into the cyclone battery (10) on both sides. The cyclone cores (2) are joined to one another at the bottom by a base plate (11). The base plate (11) allows grease and dirt running down the inside wall of the cyclone cores (2) to be conveyed to a collecting vessel. The figure also shows how the cyclone cores (2) are joined to one another at the top by a top plate (12) which is provided with holes (13) where the cleaned air (6) is sucked out via a collecting box and conveyed onwards in an exhaust air channel. The figure also shows how the cyclone cores (2) are built into an outer casing (14) with openings (15) for the polluted air (5).

The invention has been described according to a preferred set-up and configuration, and it will be appreciated that certain changes and modifications may be made without departing from the spirit of the invention. In the embodiment described here, it has been shown how the cyclone battery of the dynamic dust separator is constructed with eight cyclone spirals. However, alternative embodiments are possible, for example with the cyclone batteries comprising a varying number of cyclone spirals. The cyclone spiral shown here in hyperbolic shape can of course also be configured logarithmically or have a configuration similar to one of these. Similarly, the openings in the outer casing of the cyclone battery can be vertical or can have another pattern. The pleated band has been shown placed in the inlet of the cyclone core. However, it can of course be wider and extend slightly outside the inlet. The invention is not therefore to be seen as being limited to what has been shown and described hereinabove, and similar variants are instead covered by the inventive concept and are to be regarded as falling within the scope of the accompanying claims.

## Claims

1. A dynamic dust separator for separation of grease from extracted air, preferably from kitchen equipment, such as frying tables, deep-fat fryers, cookers, etc., and also for separation of water and dust particles from polluted air in ventilation systems,
the dynamic dust separator comprises a vertically arranged cyclone spiral (1) comprising a hyperbolically shaped cyclone core (2) with a vertical inlet (3) where polluted air (5) is adapted to be sucked in and where the vertical inlet (3) extends along the full height of the cyclone core (2), and wherein the polluted air (5) sucked into the cyclone core (2) is adapted to be forced around in a vortex, such that the centrifugal force causes pollutants (7) in the polluted air (5) to be thrown towards an inner face on the periphery of the cyclone core (2) where they are separated from the air, and where cleaned air (6) is adapted to be sucked out from the upper edge of the innermost spiral (4) of the cyclone core (2), **characterized in that** the hyperbolically shaped cyclone core is about 1.5 turns long.

2. The dynamic dust separator according to claim 1, **characterized in that** a pleated band (16) is positioned in the vertical inlet (3) of the cyclone core (2), and where the pleated band (16) extends across the entire vertical inlet (3) of the cyclone core (2) without obstructing the through-flow of the polluted air (5).

3. The dynamic dust separator according to claim 1, **characterized in that** a plurality of cyclone cores (2) are packed together such that they form a cyclone battery (10) with common delivery of the polluted air (5) to the vertical inlets (3), where the vertical inlets (3) of two cyclone cores (2) are mirror-inverted in relation to each other such that the two cyclone cores (2) form pairs with common vertical inlets (3) which are mounted facing outwards in two rows in the cyclone battery (10) with the vertical inlets (3) facing in the same direction in the row on one side and similarly, in mirror-inverted form, in the row on the other side.

4. The dynamic dust separator according to claim 1, **characterized in that** a plurality of cyclone cores (2) are packed together in two rows such that they form a cyclone battery (10) with separate vertical inlets (3) for the polluted air (5) to each one of the cyclone cores (2), which face outwards with the vertical inlets (3) facing in the same direction in the row on one side and similarly, in mirror-inverted form, on the other side.

5. The dynamic dust separator according to claim 1, **characterized in that** a plurality of cyclone cores (2) are packed together such that they form a cyclone battery (10) where cyclone cores (2) are joined to one another at the bottom by a base plate (11) and where the cyclone cores (2) are joined to one another at the top by a top plate (12) provided with holes (13) where the cleaned air (6) is sucked out via a collecting box and is conveyed onwards in an exhaust air channel.

6. The dynamic dust separator according to claim 5, **characterized in that** cyclone cores (2) are packed together such that they form a cyclone battery (10) with in-built cyclone cores (2) which are joined to one another at the bottom by a base plate (11) and where the cyclone cores (2) are joined to one another at the top by a top plate (12) provided with holes (13) where the cleaned air (6) is sucked out via a collecting box and is conveyed onwards in an exhaust air channel, and where the whole assembly is built into an outer casing (14) with openings (15) for the polluted air (5).

7. The dynamic dust separator according to claim 1, **characterized in that** the dynamic dust separator further comprises a collecting vessel arranged below said vertically arranged cyclone spiral (1).

## Patentansprüche

1. Dynamischer Staubabscheider zum Abscheiden von Fett aus Abluft, bevorzugt von Küchengeräten, wie zum Beispiel Brattische, Fritteusen, Herde usw., und auch zum Abscheiden von Wasser und Staubpartikeln aus verunreinigter Luft in Lüftungsanlagen,
der dynamische Staubabscheider weist eine vertikal angeordnete Zyklonspirale (1) auf, die einen hyperbolisch geformten Zyklonkern (2) mit einem vertikalen Einlass (3) aufweist, wobei verunreinigte Luft (5) ausgelegt ist, eingesaugt zu werden, und wobei sich der vertikale Einlass (3) entlang der gesamten Länge des Zyklonkerns (2) erstreckt, und wobei die verunreinigte Luft (5), die in den Zyklonkern (2) gesaugt wird, ausgelegt ist, in einem Vortex derart umgewälzt zu werden, dass die Zentrifugalkraft verursacht, dass Verunreinigungen (7) in der verunreinigten Luft (5) zu einer Innenfläche am Umfang des Zyklonkerns (2) geschleudert werden, wo sie von der Luft abgeschieden werden, und wo gereinigte Luft (6) ausgelegt ist, von dem oberen Rand der innersten Spirale (4) des Zyklonkerns (2) abgesaugt zu werden, **dadurch gekennzeichnet, dass** der hyperbolisch geformte Zyklonkern ungefähr 1,5 Windungen lang ist.

2. Dynamischer Staubabscheider nach Anspruch 1, **dadurch gekennzeichnet, dass** ein gefaltetes Band (16) in dem vertikalen Einlass (3) des Zyklonkerns (2) angeordnet ist, und wobei sich das gefaltete Band (16) über den gesamten vertikalen Einlass (3) des Zyklonkerns (2) erstreckt, ohne den Durchfluss der verunreinigten Luft (5) zu behindern.

3. Dynamischer Staubabscheider nach Anspruch 1, **dadurch gekennzeichnet, dass** eine Vielzahl an Zyklonkernen (2) derart zusammengepackt sind, dass sie eine Zyklonbatterie (10) mit gemeinsamer Zufuhr der verunreinigten Luft (5) zu den vertikalen Einlässen (3) bilden, wobei die vertikalen Einlässe (3) von zwei Zyklonkernen (2) derart spiegelverkehrt bezüglich einander sind, dass die zwei Zyklonkerne (2) Paare mit gemeinsamen vertikalen Einlässen (3) bilden, die nach außen gerichtet in zwei Reihen in der Zyklonbatterie (10) angebracht sind, wobei die vertikalen Einlässe (3) in der Reihe auf einer Seite in dieselbe Richtung gerichtet sind und entsprechend in der Reihe auf der anderen Seite spiegelverkehrt sind.

4. Dynamischer Staubabscheider nach Anspruch 1, **dadurch gekennzeichnet, dass** eine Vielzahl an Zyklonkernen (2) derart in zwei Reihen zusammengepackt sind, dass sie eine Zyklonbatterie (10) mit getrennten vertikalen Einlässen (3) für die verunreinigte Luft (5) zu jedem der Zyklonkerne (2) bilden, die nach außen gerichtet sind, wobei die vertikalen Einlässe (3) in der Reihe auf einer Seite in dieselbe Richtung gerichtet sind und entsprechend auf der anderen Seite spiegelverkehrt sind.

5. Dynamischer Staubabscheider nach Anspruch 1, **dadurch gekennzeichnet, dass** eine Vielzahl an Zyklonkernen (2) derart zusammengepackt sind, dass sie eine Zyklonbatterie (10) bilden, wobei Zyklonkerne (2) am Boden durch eine Basisplatte (11) miteinander verbunden sind, und wobei die Zyklonkerne (2) oben durch eine Basisplatte (12), die mit Löchern (13), wo die gereinigte Luft (6) über eine Sammelbox abgesaugt wird und in einem Abgaskanal weitergeleitet wird, versehen ist, miteinander verbunden sind.

6. Dynamischer Staubabscheider nach Anspruch 5, **dadurch gekennzeichnet, dass** Zyklonkerne (2) derart zusammengepackt sind, dass sie eine Zyklonbatterie (10) mit eingebauten Zyklonkernen (2) bilden, die am Boden durch eine Basisplatte (11) miteinander verbunden sind, und wobei die Zyklonkerne (2) oben durch eine Basisplatte (12), die mit Löchern (13), wo die gereinigte Luft (6) über eine Sammelbox abgesaugt wird und in einem Abgaskanal weitergeleitet wird, versehen ist, miteinander verbunden sind, und wobei die gesamte Anordnung in ein Außengehäuse (14) mit Öffnungen (15) für verunreinigte Luft (5) eingebaut ist.

7. Dynamischer Staubabscheider nach Anspruch 1, **dadurch gekennzeichnet, dass** der dynamische Staubabscheider ferner einen Sammelbehälter, der unterhalb der vertikalen Zyklonspirale (1) angeordnet ist, aufweist.

## Revendications

1. Séparateur de poussières dynamique pour séparer les graisses d'air extrait, de préférence d'un équipement de cuisine, comme des tables de friture, des friteuses, des cuiseurs, etc. et également pour la séparation de l'eau et des particules de poussière de l'air pollué dans les systèmes de ventilation,
le séparateur de poussières dynamique comprend une spirale de cyclone (1) agencée verticalement, comprenant un cœur de cyclone (2) de forme hyperbolique avec une entrée verticale (3) où l'air pollué (5) est adapté pour être aspiré dedans et où l'entrée verticale (3) s'étend le long de toute la hauteur du cœur de cyclone (2), et dans lequel l'air pollué (5) aspiré dans le cœur de cyclone (2) est adapté pour être forcé dans un vortex, de telle façon que la force centrifuge fait que les polluants (7) dans l'air pollué (5) sont jetés vers une face intérieure sur la périphérie du cœur de cyclone (2) où ils sont séparés de l'air, et où l'air nettoyé (6) est adapté pour être aspiré hors du bord supérieur de la spirale la plus intérieure (4) du cœur de cyclone (2), **caractérisé en ce que** le cœur de cyclone de forme hyperbolique fait environ 1,5 tours de long.

2. Séparateur de poussières dynamique selon la revendication 1, **caractérisé en ce qu'**une bande pliée (16) est positionnée dans l'entrée verticale (3) du cœur de cyclone (2) et où la bande pliée (16) s'étend à travers toute l'entrée verticale (3) du cœur de cyclone (2) sans obstruer le passage de l'air pollué (5).

3. Séparateur de poussières dynamique selon la revendication 1, **caractérisé en ce qu'**une pluralité de cœurs de cyclone (2) sont regroupés ensemble de façon à former une batterie de cyclones (10) avec une fourniture commune de l'air pollué (5) aux entrées verticales (3), où les entrées verticales (3) de deux cœurs de cyclone (2) sont en inversion de miroir l'une par rapport à l'autre de telle façon que les deux cœurs de cyclone (2) forment des paires avec des entrées verticales communes (3) qui sont montées orientées vers l'extérieur en deux rangées dans la batterie de cyclones (10) avec les entrées verticales (3) orientées dans la même direction dans la rangée sur un côté et de manière similaire, en inversion de miroir, dans la rangée sur l'autre côté.

4. Séparateur de poussières dynamique selon la revendication 1, **caractérisé en ce qu'**une pluralité de coeurs de cyclone (2) sont regroupés en deux rangées de façon à former une batterie de cyclones (10) avec des entrées verticales (3) séparées pour l'air pollué (5) vers chacun des cœurs de cyclone (2), qui sont orientés vers l'extérieur avec les entrées verticales (3) orientées dans la même direction dans la rangée sur un côté et de manière similaire, en inversion de miroir, sur l'autre côté.

5. Séparateur de poussières dynamique selon la revendication 1, **caractérisé en ce qu'**une pluralité de cœurs de cyclone (2) sont regroupés ensemble de façon à former une batterie de cyclones (10) où des cœurs de cyclone (2) sont joints l'un à l'autre au bas par une plaque de base (11) et où les cœurs de cyclone (2) sont joints l'un à l'autre en haut par une plaque de dessus (12) dotée de trous (13) où l'air propre (6) est aspiré vers l'extérieur par le biais d'une boîte de collecte et est transporté dans un canal d'air d'échappement.

6. Séparateur de poussières dynamique selon la revendication 5, **caractérisé en ce que** les cœurs de cyclone (2) sont regroupés ensemble de façon à former une batterie de cyclones (10) avec des cœurs de cyclone (2) intégrés qui sont joints l'un à l'autre au bas par une plaque de base (11) et où les cœurs de cyclone (2) sont joints l'un à l'autre en haut par une plaque de dessus (12) dotée de trous (13) où l'air propre (6) est aspiré vers l'extérieur par le biais d'une boîte de collecte et est transporté vers l'avant dans un canal d'air d'échappement, et où tout l'ensemble est construit à l'intérieur d'un carter extérieur (14) avec des ouvertures (15) pour l'air pollué (5).

7. Séparateur de poussières dynamique selon la revendication 1, **caractérisé en ce que** le séparateur de poussières dynamique comprend en outre un récipient de collecte agencé sous la spirale de cyclone (1) agencée verticalement.
